# EUROPEAN PATENT APPLICATION

(11) **EP 4 389 790 A1**
(43) Date of publication of application: **26.06.2024**
(21) Application number: 22216487.3
(22) Date of filing: 23.12.2022
(51) Int. Cl.: C08G 12/12, B32B 21/00, C09J 161/24

(54) **METHOD FOR THE PRODUCTION OF AMINOPLAST RESIN, AMINOPLAST RESIN, METHOD FOR THE PRODUCTION OF COMPOSITE MATERIALS AND COMPOSITE MATERIAL**

(71) Applicant: Lignum Technologies AG, 9052 Niederteufen (CH)
(72) Inventor: Dunky, Manfred, 3100 St. Pölten (AT); Olaechea, Luis Miguel, 1700 Fribourg (CH); Mayer, Ingo, 2542 Pieterlen (CH); Frei, Reto, 2533 Evilard (CH)
(74) Representative: Pfenning, Meinig & Partner mbB

(57) **Abstract**

The present invention is directed to a method for the production of an aminoplast resin in which a reactor mixture comprising at least one carbohydrate, a catalyst and at least one aminoplast-forming chemical is provided, said at least one carbohydrate is degenerated by catalytic dehydration to form 5-hydroxymethylfurfural (5-HMF) and directly reacting the *in situ* generated 5-HMF with the at least one aminoplast-forming chemical. The reaction mixture is kept free of phenoplast forming chemicals.

## Description

The present invention is directed to a method for the production of an aminoplast resin in which a reactor mixture comprising at least one carbohydrate, a catalyst and at least one aminoplast-forming chemical is provided, said at least one carbohydrate is degenerated by catalytic dehydration to form 5-hydroxymethylfurfural (5-HMF) and directly reacting the *in situ* generated 5-HMF with the at least one aminoplast-forming chemical. The reaction mixture is kept free of phenoplast forming chemicals.

5-Hydroxymethylfurfural (5-HMF) is an important platform chemical and can be formed preferably by acidic water- or organic media-based dehydration of several biomass polysaccharides, but always *via* fructose, using various reaction paths. For more information concerning the production of 5-HMF see Dunky (2021) [Dunky, M. (2021). Wood Adhesives Based on Natural Resources: A Critical Review Part IV. Special Topics. Reviews of Adhesion and Adhesives, 9(2), 189-268 and Progress in Adhesion and Adhesives, Vol. 6, K.L. Mittal (Ed.), pp. 761-840, Scrivener Publishing LLC, Berverly, MA, USA, 2021] and Dunky (2023, in press) [M.Dunky, Natural aldehyde-based thermosetting resins, in: M.Dunky and K.L.Mittal (Eds.) Biobased Adhesives: Sources, Characteristics and Applications, Chapter 5, Scrivener Publishing LLC, Beverly, MA, USA, 2023 (in press)].

In principle, 5-HMF can be produced in a water-based process, avoiding organic solvents; however, purification of the base solutions after dehydration of fructose needs organic solvents. This is important for the production of 5-HMF in pure and very pure quality and with high concentration up to a solid 5-HMF product without any solvent or water. Contrary to this, for the application as component in wood adhesive resins (such as in combination with urea, melamine, or phenol) some residues from this transformation process might remain without any or at least without negative impact on the quality and performance of the resins.

From chemical standpoint, the starting point for the dehydration of carbohydrates is fructose. Other sugars, such as other monosaccharides, e.g., glucose, or disaccharides, e.g., sucrose, or even carbohydrates with higher molar masses, e.g., hemicelluloses or starch, first need a transformation to fructose in order to generate 5-HMF.

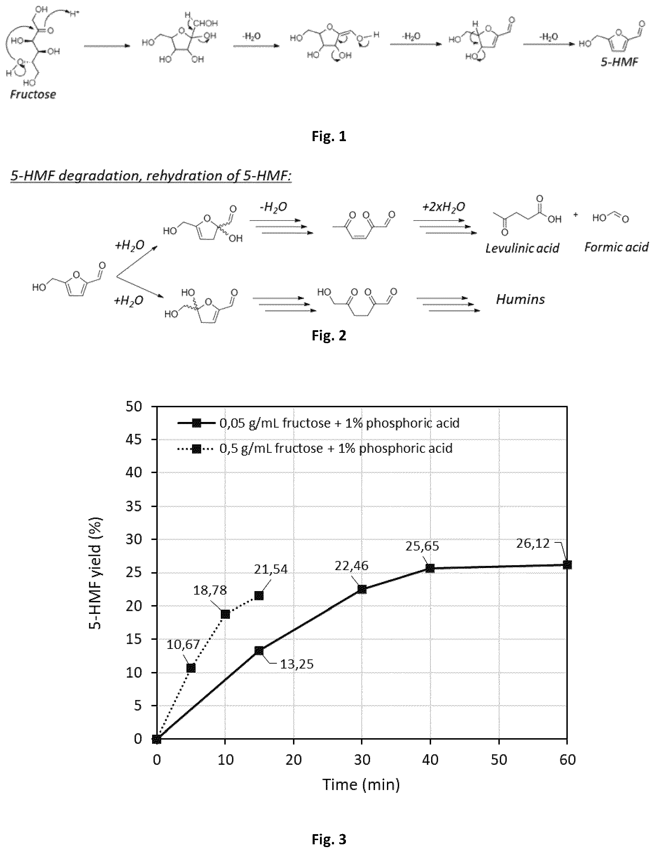

The preparation of 5-HMF has been widely studied and several approaches have been developed to form 5-HMF. Such approaches follow the same chemical pathway, meaning dehydration of fructose to 5-HMF either from fructose or from glucose after isomerization into fructose (see Fig. 1):

The dehydration as such can be performed in three main reaction types, which are:
- biphasic systems: the reaction is performed in an aqueous phase mixed with an organic phase that removes constantly the 5-HMF formed; by this procedure the probability of side reactions (i.e., forming of levulinic acid and formic acic) is suppressed
- supercritical water: when heated under pressure, water reaches temperatures above 100°C, allowing reactions that are not possible, or very slow, under ambient pressure
- use of ionic liquids: mixture of salts in precise stochiometric ratios that results in "salts" with very low melting point, which then can be used as solvents.

From these three categories, the use of supercritical water has been chosen as method of choice because of simple set up, the simplest to scale up, and low costs.

Unfortunately but expected, with this method some inconveniences are given. As the concentration of 5-HMF increases by conversion of fructose, the newly formed 5-HMF will start to decompose, first into levulinic and formic acid and then reacting to humins (see Fig. 2, showing the decomposition of 5-HMF by hydration, resulting in the formation of either levulinic and formic acid, or humins).

As the rate of both the rehydration of 5-HMF into levulinic acid and formic acid and the formation of humins will be sensitive to the concentration of 5-HMF, it can be expected, that at a certain threshold such side reactions could become dominant compared to the formation of 5-HMF itself. Such issue can be avoided or limited by using a biphasic system as it removes constantly the newly formed 5-HMF (e.g., tetrahydrofurane (THF) shows very good partition coefficients). Unfortunately, this requires the use of petroleum-based organic solvents and a sequence of steps to remove again this volatile organic solvent. Using ionic liquids, due to the absence of water as solvent, rehydration of 5-HMF is hindered and allows high yields at 80°C (between 80-90%). The drawbacks are similar to the biphasic system as organic solvents must be used to recover the 5-HMF from the ionic liquid.

5-HMF is very reactive, however further decomposes to levunilic acid and formic acid in aqueous solution; additionally formation of so-called humins as oligomers of 5-HMF and its decomposition products is possible. Both reactions must be avoided if pure 5-HMF is needed for further chemical transformations or reactions. Therefore, mainly so-called two phases-procedures are used, extracting the formed 5-HMF from the aqueous solution in order to suppress this further decomposition. Such procedures use various organic solvents, which make the process complicated and tedious as well as critical from environmental standpoint. Realizing the unfavourable effect of water due to the further decomposition of 5-HMF to side products, such as levulinic acid and formic acid, Lima et al. significantly improved 5-HMF yields to 91% by using CrCl3/RMIMCI toluene biphase system to extract the 5-HMF from ionic liquid into toluene phase [Lima, S., Neves, P., Antunes, M. M., Pillinger, M., Ignatyev, N. and Valente, A. A. (2009). Conversion of mono/di/polysaccharides into furan compounds using 1-alkyl-3-methylimidazolium ionic liquids. Applied Catalysis A: General, 363(1-2), 93-99].

In addition, though 5-HMF is seen as one of the most important feedstock chemicals in future, the current availability of 5-HMF is limited to only few small plants worldwide.

Although numerous improvements have been made in the dehydration process, most of the research is still focused on the batch reaction system instead of efficient and economically viable large-scale processes. Some of the reaction systems gave very high 5-HMF yields from the dehydration of fructose, glucose and even cellulose, for example in dimethylsulfoxide (DMSO), however, such a system may not be suitable on an industrial scale due to the 5-HMF isolation issue. In fact, isolation and purification are the major bottlenecks for large-scale 5-HMF production [Y. Zhang, Production and applications of formaldehyde-free phenolic resins using 5-hydroxymethylfurfural derived from glucose in situ. Ph.D. thesis, University of Western Ontario, London, ON, Canada (2014)].

Since 5-HMF is thermally labile under long-term heating at both acidic and basic conditions, the separation of 5-HMF *via* distillation presents a significant challenge.

The actual worldwide production of 5-HMF is very small, which is mainly caused by the high effort in separating the formed 5-HMF from the aqueous solution using biphasic systems with organic solvents. This procedure is necessary to get pure 5-HMF of high concentration or even as pure solid material; nevertheless the risk remains that 5-HMF will further decompose to levulinic acid and formic acid.

To avoid the tedious and environmentally difficult purification of the dehydration solution, including extracting the formed 5-HMF using organic solvents, attempts have been performed in two process directions, i.e., (i) the use of non-purified 5-HMF solutions for various applications, and (ii) the *in situ* generation and use of 5-HMF.

The use of non-purified 5-HMF solutions avoids the tedious purification of the dehydration reaction solutions; the solutions still contain residual carbohydrates and/or intermediates from the dehydration process. The 5-HMF is still prepared in a separate process, with no matter if (i) used more or less immediately for further but separate synthesis reactions, such as for resins, or (ii) stored for a certain period. This also includes cases where the non-purified 5-HMF solutions is, e.g., pumped immediately from one reactor (batch reactor or continuous reactor where the dehydration takes place) to another reactor where the following further reaction or 5-HMF or any synthesis based on 5-HMF and other raw materials takes place. Remaining raw materials or intermediate products from the dehydration reaction of the carbohydrate need to be checked concerning their possible impact on the reactions intended for the 5-HMF when producing various resins, e.g. in reaction with aminoplast or phenoplast forming substances.

The working group of Sailer-Kronlachner [Sailer-Kronlachner, W., C. Thoma, S. Böhmdorfer, M. Bacher, J. Konnerth, T. Rosenau, A. Potthast, P. Solt and H. W. G. van Herwijnen (2021). Sulfuric acid-catalyzed dehydratization of carbohydrates for the production of adhesive precursors. ACS Omega 6(25), 16641-16648. Sailer-Kronlachner, W., C. Rosenfeld, S. Böhmdorfer, M. Bacher, J. Konnerth, T. Rosenau, A. Potthast, A. Geyer and H. W. G. van Herwijnen (2022). Scale-Up of 5-Hydroxymethylfurfural rich adhesive precursor production and structural features of humin side products. Biomass Conversion and Biorefinery, on line] reported a procedure, where 5-HMF-rich precursors are used when producing adhesive resins. No clean up or extraction steps to reach high purity and high concentration are needed in the overall process. The disadvantage is that the possible concentration of 5-HMF remains low, otherwise this further decomposition to levulinic acid and formic acid would occur in substantial intensity. In this work the aqueous solution including formed 5-HMF and residual carbohydrates was used as separate component in the subsequent resin synthesis; the other components of the synthesis mixture are a carbohydrate syrup (aqueous solution of a carbohydrate, especially of fructose), and a reactive amine crosslinker. The molar ratio between the carbohydrate, 5-HMF (calculated *via* the yield in the precursor), and the amine was 3.7/0.2/1 [W. Sailer-Kronlachner, C. Rosenfeld, J. Konnerth, H. W.G. van Herwijnen, Influence of critical synthesis parameters and precursor stabilization on the development of adhesive strength in Fructose-HMF-amine adhesives. Forest Prod. J. (2023, in press)].

This means that the synthesis of the resin mainly occurs through reactions between the carbohydrate and the amine, because the amount of 5-HMF present in the reaction mix is very low. The low temperatures during the synthesis of maximum 50°C, additionally, let not expect any further dehydration of the added carbohydrate. However, the term *"in situ"* as used by Sailer-Kronlachner is not correct in relation to what had been said above. Though the dehydration of the carbohydrate as the one-step, and the synthesis of the resin as the other step are linked time wise close to each other, they remain two separate processes, because this precursor has been produced and stored separately and then only used in the synthesis.

In the performed lab work, carbohydrate solutions rich in 5-HMF were produced using a continuous-flow micro-reactor and diluted H₂SO₄ as the catalyst. After optimization of the process conditions (temperature, reaction time, catalyst content), a 5-HMF yield of 49% was obtained at a low reaction time of 0.6 minutes and a catalyst concentration of 1% at 175 °C and 17 bar pressure. Extensive rehydration of the product was avoided by immediate and efficient cooling of the reaction solution. Advantageously, the obtained reaction mixtures are used without the need of additional purification, filtration, or extraction steps as precursors in the production of resins, as outlined above [W. Sailer-Kronlachner, C. Thoma, S. Böhmdorfer, M. Bacher, J. Konnerth, T. Rosenau, A. Potthast, P. Solt and H.W. van Herwijnen, Sulfuric acid-catalyzed dehydratization of carbohydrates for the production of adhesive precursors. ACS Omega 6, 16641-16648 (2021)].

In binder applications, humins produced during the reaction do not need to be removed as long as they stay in solution. This is an important advantage with regard to overall yield and process simplicity because of the avoidance of separation/purification steps [W. Sailer-Kronlachner, C. Thoma, S. Böhmdorfer, M. Bacher, J. Konnerth, T. Rosenau, A. Potthast, P. Solt and H.W. van Herwijnen, Sulfuric acid-catalyzed dehydratization of carbohydrates for the production of adhesive precursors. ACS Omega 6, 16641-16648 (2021)].

EP 291 593 A1 [T. Viswanathan and D.H. Westermann, 1987, patent application assigned to Chemical Process Corporation] and US 4692 478 [T. Viswanathan and D.H. Westermann, 1986, assigned to Chemical Process Corporation] as well as Viswanathan and Toland [Viswanathan, T. and Toland, A. (1991). Whey modified phenol-formaldehyde resins as plywood adhesives. Carbohydr. Polym. 15(1), 41-49] describe a process where a carbohydrate is chemically decomposed under acidic conditions to polymerizable reactants. Only after this decomposition process, which is mainly the dehydration of the carbohydrate to 5-HMF and other by-products, such as dimers and oligimers of 5-HMF, ammonia as second resin-forming component is added to react with the various substances formed during the decomposition step to form a thermosetting resin like material. During this first step, the monosaccharides formed by the decomposition of various carbohydrate sources, such as whey, are dehydrated to 5-HMF, dimers and oligomers of 5-HMF and other dehydration products. The process of the invention, hence, comprises two steps; it is therefore not an *"in situ"* process in the sense of the description below, pointing out the simultaneous reactions of (i) formation of 5-HMF by decomposition of carbohydrates and synthesis of a resin-like material.

In the second step, i.e., the synthesis of the resin-like material, the reactive compounds, including the polymerizable monomers, such as 5-HMF, are reacted with ammonia under less acidic conditions to cause them to react, polymerize and partially crosslink to form a water-soluble, storage-stable thermosetting resin, which upon added heating will further crosslink and set to an insoluble solid. The patent text, however, also mentions that the exact mechanisms by which the thermosetting resins are formed are not known. In addition to the desirable 5-HMF, also other degradation products and charred products are produced.

The second attempt is a real *in situ* production and use of 5-HMF, whereby the dehydration of the carbohydrate and the following synthesis reaction, preferably when preparing 5-HMF based resins, take place simultaneously at the same time in the same reactor and therefore under the same process conditions. Especially the latter point is important to mention, because in separate processes the reaction conditions can be adjusted to the various reaction steps, e.g., dehydration or resin synthesis, in an optimal mode. E.g., depending on the synthesis reactions, dehydration and resin synthesis might prefer different process conditions.

Following this attempt, an interesting version of the preparation of 5-HMF resins is given, if the 5-HMF can react immediately after its preparation by dehydration of carbohydrates with various substances, mainly phenol or resorcinol; using this technique no purification of the 5-HMF in the reaction solution is necessary, as well as no storage of 5-HMF.

The idea to generate 5-HMF *in situ* immediately in combination with the synthesis of a resin would avoid the further decomposition of 5-HMF to levulinic acid and formic acid even without using the complicated extraction of the just formed 5-HMF from the aqueous acidic solution when dehydrating the carbohydrate raw material.

In recent years, a trend has emerged to integrate sequential catalytic processes involving multi-step reactions for the direct one-pot transformation of carbohydrates into the aimed fuels and chemicals, such as 2,5-diformylfuran (DFF) and 2,5-furandicarboxylic acid (FDCA). Such one-pot reactions have several benefits, including the fact that isolation and purification of intermediate compounds, such as 5-HMF, can be avoided [B. Liu and Z. Zhang, One-pot conversion of carbohydrates into furan derivatives via furfural and 5-hydroxylmethyl-furfural as intermediates. ChemSusChem 9, 2015-2036 (2016)].

Reactions of *in situ* prepared 5-HMF with phenol were especially reported by the working group of Y. Zhang and Z. Yuan at the University of Western Ontario, Canada, in several papers. The prepared novolak type-phenolic resins used 5-HMF *in situ* prepared from glucose and reacted simultaneously with phenol. The 5-HMF is prepared by dehydration of carbohydrates and reacts with phenol in a one-pot process, which means that all components, i.e., the carbohydrate as source for the 5-HMF, phenol, and various catalysts, have been loaded to the reactor at the start of the process. Aim of the process is the production of relevant resins; using this technique no purification of the 5-HMF in the reaction solution is necessary, as well as no storage of 5-HMF [Y. Zhang, Production and applications of formaldehyde-free phenolic resins using 5-hydroxymethylfurfural derived from glucose in situ. Ph.D. thesis, University of Western Ontario, London, ON, Canada (2014). Y. Zhang, Z. Yuan and C. Xu, Engineering biomass into formaldehyde-free phenolic resin for composite materials. AIChE J. 61, 1275-1283 (2015). Y. Zhang, M. Nanda, M. Tymchyshyn, Z. Yuan and C. Xu, Mechanical, thermal, and curing characteristics of renewable phenol-hydroxymethylfurfural resin for application in bio-composites. J. Mater. Sci. 51, 732-738 (2016)].

Yuan and coworkers [Z. Yuan, Y. Zhang and C.C. Xu, Synthesis and thermomechanical property study of Novolac phenol-hydroxymethyl furfural (PHMF) resin. RSC Advances 4, 31829-31835 (2014)] as well as Zhang and coworkers (references see above), all working in the same laboratory, developed a novolac-type PHMF resin designing a one-pot process by reacting phenol and 5-HMF derived *in situ* from glucose at 120°C in the presence of CrCl₂/CrCl₃ and tetraethylammonium chloride (TEAC) catalysts. Here CrClₓ catalyze both the reaction of 5-HMF formation and its resinification with phenol. Since the reaction was performed as one-pot version, no purification of the yielded 5-HMF was done. The resins have a structure similar to novolac phenol-formaldehyde (nPF) resin, suggesting that the PHMF resins synthesized using renewable resources may be a promising formaldehyde-free alternative to conventional novolac PF resins.

A more detailed procedure of a novolac-type phenol-5-HMF (PHMF) resin was reported by Zhang and coworkers. Phenol was reacted with 5-HMF, in-situ derived from glucose at 120°C by acid catalysis. A typical PHMF novolac resin was prepared using the following method: 9.4 g phenol (0.1 mol), 36.0 g (0.2 mol) glucose, 0.1116 g CrCl₂ (0.02 mol), 0.1209 g CrCl₃^{∗}6H2O (0.01 mol), 0.4985 g (0.06 mol) TEAC, and 9 mL deionized water were loaded into a round-bottom pressure flask. The reactor was placed into an oil bath preheated to 120°C and stirred for reaction for 5-8 h [Zhang, Y., Nanda, M., Tymchyshyn, M., Yuan, Z. and Xu, C. (2016). Mechanical, thermal, and curing characteristics of renewable phenol-hydroxymethylfurfural resin for application in bio-composites. Journal of materials science, 51(2), 732-738]. In a further experiment, the amount of glucose was reduced from 0.2 to 0.09 mol. After cooling, the reaction mixture was diluted with 80/20 (v/v) methanol/water to form a homogeneous solution. Samples of this solution were then taken and further diluted with HPLC solvent for quantitative analysis of glucose, phenol, and 5-HMF. The product was purified (to remove unreacted glucose and phenol) by first removing the solvent using a rotary evaporator, then dissolving the remaining material in acetone, and precipitating PHMF in 90/10 (v/v) water/methanol. After vacuum drying (to completely remove water in the samples), the precipitation process resulted in a semi-solid black PHMF product, subject to various analyses and applications. Bisphenol A diglycidyl ether (DGEBA) was used as a formaldehyde-free curing agent by substituting conventional formaldehyde-based hexamethylene tetramine (HMTA) to crosslink the PHMF resin [Zhang, Y., Ferdosian, F., Yuan, Z., Xu, C. (2017). Sustainable glucose-based phenolic resin and its curing with a DGEBA epoxy resin. J. Taiwan Inst. Chem. Eng. 71, 381-387].

The technology investigated by the working group at the University of Western Ontario was also summarized in various patent applications and granted patents, such as WO2015123781 A1 [C.Xu, Y.Zhang, and Z.Yuan, Formaldehyde-free phenolic resins, downstream products, their synthesis and use, WO 2015 123781, patent application assigned to University of Western Ontario (2015)], US10266633 [C.Xu, Y.Zhang, and Z.Yuan, Formaldehyde-free phenolic resins, downstream products, their synthesis and use, patent application assigned to University of Western Ontario, 2019], or US 2016/0355631 [C. Xu, Y. Zhang, and Z. Yuan, Formaldehyde-free phenolic resins, downstream products, their synthesis and use, patent application assigned to Univ. Western Ontario, 2016]. Described is a resin as reaction product of 5-HMF (produced *in situ* from carbohydrate) and a phenolic compound, such as phenol, cardanol, or bio-phenol, such as phenolated depolymerized lignin. Converting the carbohydrate, such as a hexose, to 5-HMF takes place in the presence of phenol. The 5-HMF was generated *in situ* and found to react with a phenolic compound in a one-pot process. The method comprises the conversion of a hexose to 5-HMF in the presence of a phenolic compound and a catalyst that promotes formation of covalent bonds between a carbon atom of the aromatic ring of the phenolic compound and the carbon of the aldehyde group of the 5-HMF to form the resin.

The reaction system used 120°C with chrome based/TEAC catalyst with and without water; glucose conversions were in the range of 90-100%, while a very low concentration of free 5-HMF (mostly <1.5 wt.-%) was detected, implying an in-situ consumption of 5-HMF after its formation *via* phenol-5-HMF resinification. The newly formed 5-HMF reacted quickly with phenol after its formation, which fact apparently drove the dehydration reaction forward, but maintaining a low concentration of free (unreacted) 5-HMF and, hence, attenuating its conversion to unwanted by-products such as levulinic acid or formic acid.

Initial approaches toward carbohydrate-based adhesives, hypothesizing about an *in situ* 5-HMF formation and its use as a crosslinker, date back to 1926 [Meigs, J.V., Dehydrated carbohydrate-phenolic resinous products and process of making same. US 1,593,342, patent application assigned to J.V. Meigs, 1926]. This patent describes the reaction of carbohydrates, i.e., mainly monosaccharides such as hexoses or pentoses, with an aromatic moiety, especially based on benzene or naphthalene, such as phenol. Meigs was searching for a process to produce solid, fusible, thermoset moulding compounds. The reactions used both basic and acid catalysis and often included co-reactions with aniline or aliphatic amines. The process comprises splitting off water when dehydrating carbohydrates in the presence of these phenolic bodies; the patent mentions the formation of 5-HMF as well as the synthesis of a compound comprising one molecule 5-HMF and two molecules of phenol, whereby both phenol molecules react with the aldehyde group of the 5-HMF. It is followed that much of the water produced is obtained by a splitting off water from the hexose molecule. Therefore, the resinous body produced comprises the anhydrous product of the hexose combined with phenol. In this way, substantially anhydrous resinous bodies are produced. This term means resinous bodies, which do not give off water when hardened. No further information is given in the patent about the stability and potential further reactions of 5-HMF.

Similar procedures, e.g., reacting of a carbohydrate with a reactive nitrogenous basic body (such as aniline) in the presence of acidic substances yielding a resinous material were described in US 1,801,053 [Meigs, J.V., Carbohydrate product and process of making same. US 1,801,053, patent assigned to Meigsoid Corporation, 1931].

Chang and Kononenko [Chang, C.D. and Kononenko, P.K. (1962). Sucrose-modified phenolic resins as plywood adhesives. Adhesives Age, 5(7), 36-40] developed an adhesive system (claimed to be suitable for exterior plywood applications) by co-reacting sucrose into a phenol-formaldehyde resin preparation under alkaline conditions.

More recently, Gibbons and Wondolowski [Gibbons, J.P. and Wondolowski, L., Process for producing carbohydrate-phenol condensation resins. US 4,048,126, patent application assigned to CPC International Inc., 1977] prepared a carbohydrate-phenolic resin, wherein a phenolic compound (especially phenol) is reacted with a hexose saccharide (e.g., dextrose) in the presence of a Lewis acid (i.e., metal salt) catalyst to form a solid fusible resin, which is curable with crosslinking agents, such as hexamethylenetetramine. The reaction between phenol and dextrose is described as decomposition of the dextrose to 5-HMF and following reaction of phenol with this formed 5-HMF.

In a further work, Gibbons and Wondolowski [Gibbons, J.P. and Wondolowski, L., Carbohydrate-based condensation resin. US 4,048,127, patent application assigned to CPC International Inc., 1977] prepared a carbohydrate-phenolic resin by reacting carbohydrates, preferably a hexose, with phenol and urea, or a diamine, in the presence of an acid catalyst. The fusible resin prepared in this step, used as moulding compound, was cured to the thermoset stage by heating with hexamethylenetetramine. The invention utilizes urea as a coupling agent, which is believed to link the carbohydrate component *via* diureide with the phenol, thereby minimizing the amount of phenol. The diureide is formed in the reaction of one urea molecule with two 5-HMF molecules, which react *via* their aldehyde group with the urea. Further condensation or chain formation based only on urea and 5-HMF do not take place. In the following the diureide reacts *via* its two hydroxyl groups with phenol. Chain formation includes a monomer consisting of two phenol molecules, linked *via* the diureide. Instead of urea, also diamines, such as toluene diamines and alkylene diamines, can be used. Examples or recipes with only urea and without phenol are described or mentioned neither in the patent text nor in the claims.

Koch et al. [Koch, H., Krause, F., Steffan, R., and Woelk, H.U. (1983). Herstellung von Phenolharzen unter Verwendung von Stärkeprodukten (Preparation of phenolic resins under usage of starch products). Starch-Stärke, 35(9), 304-313] investigated the incorporation of starches and starch hydrolysates in phenolic resins of the novolak and resol type *via* their acid catalysed dehydration to 5-HMF in the presence of phenol and formaldehyde. Based on the formation of HMF/phenol-condensates, it was claimed that savings of up to 40% phenol and of 65% formaldehyde are possible in comparison to commercial resins. 5-HMF can react due to its aldehyde and methylol functions with phenol in a manner similar to formaldehyde in the production of phenolic resin. The reaction to phenol-5-HMF or phenol-5-HMF-formaldehyde condensates that takes place directly after the 5-HMF formation during resin production has a favourable effect on 5-HMF formation in that 5-HMF is removed from the further reaction sequence and the formation of the 5-HMF secondary products, such as levulinic acid or 5-HMF homo-condensates is reduced.

In a similar work, Koch and Pein [Koch, H. and Pein, J. (1985). Condensation reactions between phenol, formaldehyde and 5-hydroxymethylfurfural, formed as intermediate in the acid catalysed dehydration of starchy products. Polymer Bulletin, 13(6), 525-532] investigated the incorporation of starch hydrolysates in phenolic resins of the novolak and resol type *via* intermediate acid catalyzed dehydration to 5-HMF. Due to the formation of HMF/phenol condensates, savings of up to 40 % of the phenol and 50 % of the formaldehyde (by weight) are possible in comparison to commercial resins. Very important for an incorporation of 5-HMF in phenolic resins is that self-condensation of 5-HMF into water-insoluble, humin-like polymers on the one hand and decomposition into levulinic acid and formic acid on the other hand are largely avoided. This is achieved since the formation of 5-HMF takes place already in the presence of phenol. In this respect, the use of starch hydrolysates with varying molecular weight distribution may offer an advantage over pure glucose, because the dehydratable monosaccharide units are then formed only successively. When studying phenol conversion in relation to time, it is noted that, when starch hydrolysates are included, mainly phenol and formaldehyde tend to condensate first before further condensation with 5-HMF derived from the hydrolysate takes place. While the use of starch hydrolysates in novolaks does not call for a change in process conditions, carbohydrate-modified resols require a two-step process. First, a precondensate of 5-HMF and phenol is produced by acid catalysis, which after alkalization is then reacted in the usual manner with formaldehyde. It is assumed that the precondensate is methylolated as it happens in conventional resol manufacture [Koch, H. and Pein, J. (1985). Condensation reactions between phenol, formaldehyde and 5-hydroxymethylfurfural, formed as intermediate in the acid catalyzed dehydration of starchy products. Polymer Bulletin, 13(6), 525-532].

Koley and coworkers [Koley, R., Kasilingam, R., Sahoo, S., Chattopadhyay, S., and Bhowmick, A. K. (2019). Synthesis and characterization of phenol furfural resin from Moringa oleifera gum and biophenol and its application in styrene butadiene rubber. Industrial & Engineering Chemistry Research, 58(40), 18519-18532] reported about the synthesis and characterization of a biowaste-based tackifying phenolic resin and its application in rubber. A biophenol-furfural-5-HMF resin was successfully synthesized from monosaccharides. Acid-catalyzed condensation reaction of biophenol and monosaccharide was carried out using different acids as catalysts. Suitable synthesis conditions had been, e.g., 130°C and 7.5 hours by using sulfuric acid as a catalyst.

Novolac type phenolic resins were prepared by Wang et al. [Wang, M., Yuan, Z., Cheng, S., Leitch, M. and Xu, C. C. (2010). Synthesis of novolac-type phenolic resins using glucose as the substitute for formaldehyde. Journal of applied polymer science, 118(2), 1191-1197] using glucose as the substitute for formaldehyde. The resins were synthesized with varying molar ratios of phenol to glucose, catalysed by strong acid (such as sulfuric acid) at 120-150°C. Analysis of the resins using gel permeation chromatography (GPC) and proton nuclear magnetic resonance (1H-NMR) showed that they were broadly distributed oligomers derived from the Friedel-Crafts condensation of phenol and glucose. Using hexamethylenetetramine (HMTA) as the curing agent, the phenol-glucose resins could be thermally cured and exhibited exothermic peaks at 130-180°C, typical of thermosetting phenolic resins. In order to suppress possible side reactions of glucose (e.g., dehydration reactions) as much as possible, the resin synthesis was conducted mainly at a low temperature of 120°C, a temperature proved to be enough for the polymerization of phenol and glucose. In a typical run of the synthesis, phenol (9.4 g, 0.1 mol) and glucose (9 g, 0.05 mol) were charged into a 100 mL flask. After heating to 120°C in an oil bath, 0.09 g sulfuric acid (96 wt% concentration) was added. The reaction was kept for 3 hours at 120°C, and a dark viscous liquid was obtained. After cooling down to 60°C, 1.7 mL NaOH solution (1.0 M) was added to neutralize the product solution. Water was removed by rotary evaporation under reduced pressure at 60°C. The resulted product was a brown viscous resin. No indication or even evidence was reported on the formation of 5-HMF during the acidic reaction. For the formation of a distinct molar mass distribution as shown by gel permeation chromatography (GPC), also a self-condensation of glucose was mentioned as possible reaction. Proton-NMR proved this mentioned direct reaction between phenol and glucose. In addition, FTIR proved that there were no apparent signals ascribable to furan rings in the synthesized phenol-glucose resins. This means that a decomposition of the glucose by dehydration to furanic moieties did not take place. This is surprising, because the synthesis conditions could let expect such formation of furanic moieties. The authors only mention that the reaction mechanism between phenol and glucose in the presence a strong acid might be complex as there are many possible degradation pathways for the hydrolysis degradation of glucose in an acidic aqueous solution, producing 5-HMF and carboxylic acids as the main degraded products. However, based on the results of proton-NMR and FTIR, the Friedel-Crafts condensation reactions between glucose and phenol under acidic catalysis were likely the dominant pathway resulting in the formation of oligomeric resins (Wang et al. 2010). GB 583 021 [A. van Hoboken, J.H. van Hoboken, and P.C. Kruyff, Improvements relating to the production of condensation products of the furylmethane derivative type, 1939] describes the reaction between a carbohydrate and either resorcinol or phenol under acidic conditions. The carbohydrate is dehydrated to 5-HMF and reacts immediately with the phenolic moiety, whereby the reaction remains at the stage of two molecules of the phenolic compound having reacted with one molecule of 5-HMF. This compound, which is not soluble in water, can then be reacted in a further and separate step with other aldehydes, e.g., formaldehyde.

US 4048 126 [J.P. Gibbons and L. Wondolowski, Process for producing carbohydrate-phenol condensation resins, patent application assigned to CPC International Inc., 1976] describes the formation of a resin based on phenol and 5-HMF, whereby the 5-HMF is produced *in situ* in a mixture of a carbohydrate and phenol under acidic conditions.

US 4085 076 [J.P. Gibbons and L. Wondolowski, Carbohydrate-based condensation resin, patent application assigned to CPC International Inc., 1977] describes the formation of a resin consisting of 5-HMF, phenol, and urea. In this case, first a diureide is formed in the reaction of the urea with the 5-HMF, which has been formed *in situ* from a carbohydrate, under acidic conditions; this diureide then reacts further *via* its hydroxyl groups with phenol, forming a resin.

Mudde [Mudde, J.P. (1980) Corn starch: A low-cost route to novolac resins. Mod. Plast. 57,2,69-74] described a system based on the acidic conversion of starch to 5-HMF for condensing with phenol into a novolac resin.

According to Clark and coworkers [Clark, R.J., Karchesy, J.J. and Krahmer, R.L. (1988). Investigation of a new resin as an exterior adhesive to bond high moisture content veneers and glulam. Forest Prod. J. 38 (7-8), 71-75] various formulations for some carbohydrate-phenol-based resins have appeared in recent years; a two-stage reaction is typically used to prepare such resins for use as wood adhesives. In the first stage, the carbohydrate (usually starch or glucose) is reacted at 130 to 150°C with phenol, and sometimes urea, under acid catalysis. In the second stage, the reaction mixture is made basic, formaldehyde and phenol (distilled off in the first stage) are added, and the reaction mixture is heated to produce a resole-type resin. Such resins show promise for partial replacement of phenol and formaldehyde in plywood adhesives. This technology still needs formaldehyde for the resin preparation. The reactions ongoing in the first step are not fully characterised and only to produce precursors for the following reaction of the mixture with formaldehyde, meaning the resin formation as such. In a third step, finally, resorcinol is added to produce a novolak.

Zhang et al. [Zhang, L., Zheng, Y., Zhang, Y. and Lin, T. (2013). Effect of starch and lignin on physico-chemical properties of phenol-starch resin and its resin core sand. Starch-Stärke, 65(7-8), 666-678] prepared a novolac like phenolic resin by copolymerization with phenol and hydrolyzed starch as the substitute for formaldehyde under catalysis of sulfuric acid. Liquefied phenolated lignosulfonate was introduced to the phenol-starch resin in this study as a partial phenol substitute. Phenol (30 g), starch (the molar ratio of phenol-to-starch varied from 2.4:1, 2.0:1, 1.6:1 to 1.2:1) and sulfuric acid (2 mol/L, used as a catalyst) were mixed in a three-necked lab reactor at 60°C at pH = 2.5. The mixture was gentle warmed and stirred at 105°C for about 1 h until all starch was completely hydrolyzed. The temperature was raised to 170°C thereafter and heated with constant stirring for 2 h. Sulfuric acid remaining in the resulting mixture gained above was neutralized. Subsequently, the mixture was evaporated by reduced pressure vacuum at 170°C for 1 h to get condensed phenol-starch resin in a solid form. Molar ratio of phenol: starch was decreased by adding starch, which improved the hydroxymethylation degree of phenol, resulting in more crosslinks between hydroxymethyl phenol and starch. ¹³C NMR spectra let assume that the 5-HMF formed from the hydrolyzed starch has reacted with the phenolic unit.

Zhang et al. [Zhang, Y., Yuan, Z., Mahmood, N., Huang, S. and Xu, C. C. (2016). Sustainable bio-phenol-hydroxymethylfurfural resins using phenolated de-polymerized hydrolysis lignin and their application in bio-composites. Industrial Crops and Products, 79, 84-90] prepared a bio-based novolac resin, i.e., bio-phenol-hydroxymethylfurfural (BPHMF) resin, using a hydrolysis lignin (HL) as bio-phenol to partially substitute phenol and using glucose as a precursor for 5-HMF. To enhance the chemical reactivity of the hydrolysis lignin with its still very high molecular weight, the HL was first degraded to de-polymerized hydrolysis lignin (DHL) followed by phenolation. BPHMF resin was then synthesized *via* the reaction between the phenolated DHL and 5-HMF in-situ derived from glucose at an 85% yield under pressure in the presence of Lewis acid catalysts. The resin was curable with 15 wt.% hexamethylenetetramine (HMTA).

In order to improve the performance of soft plantation wood, an environmentally friendly wood modifier was developed by Liu et al. [Liu, Q., Du, H. and Lyu, W. (2021). Physical and mechanical properties of poplar wood modified by glucose-urea-melamine resin/sodium silicate compound. Forests, 12(2), 127]. First, using urea and melamine as crosslinking agents, the glucose-urea-melamine resin (MUG) was prepared with glucose under the catalysis of inorganic acid and metal ions. In this step, 370 g of glucose, 26 g of melamine, and 260 g of distilled water were added into the reactor and fully stirred to dissolve at 60°C. An appropriate amount of copper sulfate and ammonium chloride were used to adjust the pH = 3, then 49 g of urea were added and the temperature was increased to 100°C. When the solution colour became reddish brown, the pH was adjusted to 6.5-8.5, and the solution was cooled down to 40°C. The reaction was continued by adding 2 wt% of a mixed curing agent (the mass ratio of itaconic acid and boric acid as a curing agent was 1:1) for another hour.

The molar ratio between glucose on the one hand and urea and melamine on the other hand can be expressed in the form mole glucose / mole (NH₂)₂, whereby urea equals one mole of (NH₂)₂ and melamine equals 1.5 moles of (NH₂)₂, based on the 3 NH₂-groups in melamine. Considering that one molecule glucose is isomerized to one molecule fructose, and that one molecule fructose can yield one molecule of 5-HMF, also the molar ratio 5-HMF/(NH₂)₂ can be calculated under the assumption that all glucose is isomerized to fructose that fructose then is quantitatively dehydrated to 5-HMF.

When 1 mL resin was mixed with 9 mL distilled water at 23°C, the solution was still clear without precipitation, hence, the water solubility multiple of the resin is considered to be more than 9. The solid content of the reaction product was 52.6% and the viscosity as low as 4.2 mPa*s, tested by a rotary viscometer. Both, high miscibility with water and the very low viscosity at the given solid content point to the fact that the extent of the reaction between melamine and/or urea on the one hand and glucose and/or 5-HMF and/or other disubstituted furan rings, both types pf moieties formed by the dehydration of glucose, was very low, as such resins are used for impregnation of wood. This low viscosity was even not achieved in the first part of the reaction, where this reaction between melamine and/or urea on the one hand and either glucose and/or 5-HMF and/or other disubstituted furan rings, both types of moieties formed by the dehydration of glucose, on the other hand, but only when adding this further curing agent mixture.

For the Fourier Transform Infrared Spectroscopy (FTIR) analysis the melamine-urea-glucose was cured in an oven at 120°C for 2 h; the cured resin was then pulverized and sieved to produce 160-200 mesh powder. According to the authors the glucose is first isomerized to fructose, and then further dehydrated to 5-HMF, containing an aldehyde groups and a hydroxymethyl group, which both react with the NH₂-groups of urea. The authors present relevant chemical reaction schematics, taking FTIR data as evidence for the formation of the furan ring. Two FTIR bands were attributed to the conjugate C=C bond and skeletal vibration of 2,5-disubstituted furan rings, respectively. No evidence was shown that the 2,5-disubstituted furan was 5-HMF. In addition, the FTIR analysis was not evaluated to give information on the amount of glucose transformed to this disubstituted furan rings or the content of the disubstituted furan rings during the reaction. Further evaluation of the FTIR data point to crosslinking reactions directly between the hydroxyl groups of glucose and urea. No clear reasons for the colour change during the reaction was given; the authors only indicate that there are more potential brown substances originating from caramelization and Maillard reactions. The authors present reaction schemes for the dehydration of glucose *via* isomerization to fructose, as well as reaction steps between urea and 5-HMF, indicating dimers consisting (i) of one molecule urea and two molecules 5-HMF or (ii) two molecules urea and one molecule 5-HMF, whereby both, the aldehyde group and the hydroxymethyl group of the 5-HMF should react with the NH₂ groups of the urea.

In addition, the low viscosity points to the fact that, contrary to the adhesive resin as described here in the given patent application, the reaction product in the paper of Liu et al. (2021) is very low in molar mass, as especially shown by the low viscosity of the resin. This points to only monomeric rather than not even oligomeric molecule structures, significantly different to adhesive resins with their distinct higher molar masses as requested to avoid overpenetration of the resin into the wood structure and to form the cohesive bond line. In complete contrast to this, an impregnating resins, as it was prepared by Liu and coworkers, must fully penetrate into the wood tissue. In addition, the given reaction parameters during the resin synthesis (100°C at a still moderate acidic pH = 3) let not expect any dehydration of the glucose, especially not in any technically reasonable time span. No duration of the synthesis reaction is indicated in the paper [Liu, Q., Du, H. and Lyu, W. (2021). Physical and mechanical properties of poplar wood modified by glucose-urea-melamine resin/sodium silicate compound. Forests, 12(2), 127].

In order to provide a basis for the application of melamine-urea-glucose (MUG) composite modifier and promote wood green modification, the changes of micro morphology, chemical structure and element composition of modified wood were studied by Haojia et al. [Haojia, D., Wenhua, L., Qiangqiang, L., Jing, K. and Xiaoqing, W. (2022). Properties and mechanism of poplar wood modified by melamine-urea-glucose (MUG) biomass resin and sodium silicate compound. J.Beijing Forestry Univ. 44(5), 124-131]. By introducing hydrophobic groups such as organosilanes into the compound solution of the MUG biomass resin and sodium silicate, a so-called silane hybrid modifier (GST) was prepared. Then the poplar wood was modified with it by vacuum pressure impregnating treatment, improving wood dimensional stability and mechanical properties. The synthesis of the MUG impregnating solution seems to be identical to the procedure as described by Liu and coworkers [Liu, Q., Du, H. and Lyu, W. (2021). Physical and mechanical properties of poplar wood modified by glucose-urea-melamine resin/sodium silicate compound. Forests, 12(2), 127], as far as the information in both papers could be compared.

Viswanathan and Richardson [Viswanathan, T. and Richardson, T. Thermosetting adhesives resins from whey and whey by-products. Ind. Eng. Chem. Prod. Res. Dev. 1984, 23, 644-647] investigated the preparation of resins based on lactose in whey. Various versions of whey were mixed with urea, phenol, or mixtures of urea and phenol as well with various catalysts. Reaction conditions had been 100 - 125°C for 2 - 6 hours of reaction time. In the presence of a catalyst, glucose reacts with urea, melamine, or phenol at 110°C to form a reddish-brown fluid of low-viscosity. The exact mechanism of action that occurs during the practice of the method is unknown. The chemistry behind these syntheses has been explained by the authors in different ways. Reducing sugars are known to react with urea to glycosyl ureas, which then undergo browning reactions *via* the so-called Amadori rearrangement. These reactions form part of a complex series of the events taking place *via* Maillard reactions. The final product (melanoidins) is a series of coloured polymeric compounds with a range in molecular weight from 10,000 to 100,000 or more. In addition, caramelization of sugars under acidic conditions is known to occur yielding in high molar mass compounds consisting of condensed monomers generated by the degradation of the sugar molecule. Another theory of the authors indicates that the sugars are converted into reactive monomeric species due to the thermal degradation, such as 5-HMF. However, the authors themselves point to the fact, that the synthesis path proposed *via* formation of 5-HMF reacting with crosslinking agents such as urea and phenol is only one of several possible pathways. At this point the resin was heated under atmospheric pressure to remove water until the required viscosity was obtained. The fusible resin thus obtained had a solids content of 65%, a density of 1.3 kg/l, a pH = 6.3, and a viscosity of 450 mPs*s at 25°C. Resin samples were also prepared where phenol or a mixture of urea and phenol was used as crosslinking agents. When phenol was the crosslinker, the molar ratio of lactose to phenol was chosen to be 1:0.5, and when urea/phenol was used the molar ratio of lactose to urea to phenol was 1:0.5:0.5. Lactose is a disaccharide consisting of D-galactose und D-glucose. Therefore the molar ratio of monomeric sugar to phenol was 4 : 1, and when urea/phenol was used the molar ratio of monomeric sugar to urea to phenol was 2 : 0.5 : 0.5. The molar ratio of the urea-lactose resin was lactose : urea = 1 : 1 (means molar ratio of monomeric sugar: urea = 2 : 1). This means that monomeric sugar was always given in majority. All of the above resins were reddish-brown homogeneous suspensions that could be easily used. The final pH of the phenol containing resin was about 3 and that of resins from both urea and phenol was about 4.50. Interestingly, also a sample containing neither urea nor phenol was prepared using acid whey permeate, and this reaction was terminated after heating for 10 h at 105°C. Further heating caused formation of insoluble aggregates in the reaction mixture. The final pH of the stable suspension was around 3.0, and it had a solids content of 65%. This "pure" resin (only consisting of a disaccharide as resin-forming raw material) was formed under similar process conditions as the resins containing also urea or phenol, or a mixture of urea and phenol. No information is given by the authors, on which reaction scheme this lactose resin is based and if there is dehydration of the lactose given with self-polymerization of 5-HMF or other disubstituted furans, if such moieties were formed in this dehydration reaction. The fact that obviously various types of reactions take place, such as (i) Maillard, (ii) caramelization, and (iii) thermal degradation and polymerization of lactose as a reducing sugar present in whey, was confirmed in a later paper of one of the authors [T. Viswanathan and Gilton, T. (1986). Improved internal bond strength of high-density particle boards containing formaldehyde-free whey-based resins on addition of phthalic anhydride. Ind. Eng. Chem. Prod. Res. Dev 25(2), 313-315].

In order to verify or falsify the hypothesis that 5-HMF formed by the dehydration of lactose would be the monomer reacting with crosslinkers such as urea or phenol to form polymeric resins, pure 5-HMF was reacted with urea or phenol in the presence of ammonium nitrate under conditions identical with those for polymerization with lactose as the reactant. Surprisingly, it was found that the reaction mixture (even after prolonged reaction times) did not yield any significant precipitate on addition of methanol. In addition, the prominent peak at 196 nm in UV, that increased with reaction time in the lactose-containing reaction, was absent in the pure-5-HMF-containing samples. Such observations indicate that polymers formed by the reaction of pure 5-HMF and urea or phenol are different from the ones produced when the sugar is present. High molecular weight polymers, like the ones expected to form from lactose, would be insoluble in methanol, in addition to having a high wavelength of maximum absorption in both the visible and near-UV regions. These results suggest that 5-HMF formation alone is not a governing factor in polymer formation and that there are other pathways responsible for the polymerization reactions. It is therefore logical to assume that reaction of 5-HMF with urea or phenol produces short chain oligomers that are soluble in methanol, but when lactose is present these oligomers may react with other monomers such as furfural, other related furans, and monosaccharides, such as glucose or galactose and their isomerization products. Thus, the polymer formed will be a complex array of different molecules in which 5-HMF is present only as a small fraction of the whole polymer chain. A qualitative test to determine if free sugars are being incorporated into the polymers obtained showed the presence of a mixture of carbohydrates including glucose, galactose, and mannose in the resinous polymers [T. Viswanathan, Identification of thermosetting adhesive resins from whey permeate as high molecular weight Maillard polymers. Ind. Eng. Chem. Prod. Res. Dev. 24, 176-177 (1985)]. Such products are thought to have resulted from advanced Maillard and caramelization reaction of sugars, among others.

Since the final product contains intact sugar molecules, it implies that hydroxyl groups are available that could be crosslinked and yield higher molecular weight species. The reaction between phthalic anhydride and secondary hydroxyls in a carbohydrate is known to result in a three-dimensional network of macromolecules accompanied by release of energy. This reaction is probably taking place during the application of the resin in the production of particleboards.

The synthesis of a melamine-glucose adhesive was reported by Chen and Zhang [Chen, S. and Zhang, L. (2005). Synthesis of melamine-glucose resin adhesive. Science in China Series B: Chemistry, 48 Supp. 29-32]. The authors indicate that in the presence of a catalyst, 5-HMF reacts with melamine to form a partially polymerized resin of low viscosity. For curing under heat the addition of phthalic anhydride was necessary. It is believed that the addition of urea, melamine, or phenol should be favourable for the polymerization reaction. This is probably due to the decreased formation of levulinic acid and formic acid and other fission products that may not participate in the polymerization reaction to the same extent as 5-HMF, the main degradation product of sugars. The synthesis of the melamine-glucose resin performs according to the following recipe: 60 g sucrose, 3.5 g NH₄NO₃ and a not further specified catalyst (0.2 - 0.5 g) were added into beaker that contained 35mL water and stirred till solubilisation. Then the initial pH of the mixture solution was adjusted by using diluted HCl. The selected pH were between 1.0 and 4.0. After that, the mixture was poured into a flask that contained melamine. The mixture solution reacted at high temperature (95 - 110°C) for 6 - 9 hours with stirring. The ratio between melamine and glucose (not indicated if mass ratio or molar ratio) was in the range of 1.0 : 4 to 2.5 : 4. Based on FTIR results the authors indicate that new aldehyde groups occur, obviously based on the thermal degradation of glucose. No evidence, however, is given that this new aldehyde is 5-HMF.

Christiansen [Christiansen, A.W., Durable Wood Adhesives Based on Carbohydrates, in: Wood adhesives in 1985: Status and needs. Proceedings 47344, Christiansen, A.W., Gillespie, R.; Myers, G.E.; River, B.H. (Eds.), Forest Products Society, pp. 211-226 (1986). Christiansen, A. W. (1989). A glucose, urea, and phenol-based adhesive for bonding wood, in: Adhesives from Renewable Resources, Chapter 26, pp. 370-386, ACS Symposium Series Vol. 385] as well as Christiansen and Gillespie [Christiansen, A.W. and Gillespie, R.H., Potential of carbohydrates for exterior-type adhesives. Forest Prod. J 36, 7-8, 20-28 (1985)] report about reactions of carbohydrates with phenol and urea, causing dehydration of the carbohydrate. However, still addition of formaldehyde is necessary to prepare these resins. The carbohydrate, phenol, and urea were placed in a lab kettle, and the mixture was heated to 90°C while stirring, then the sulfuric acid catalyst was added. The temperature was allowed to rise as high as 150°C during 4 hours or until the desired amount of condensate (water) had been collected. Heating was discontinued until the temperature fell to 90°C at which time the collected condensate was returned to the reaction mixture. The pH was raised to neutral. After the temperature had fallen to 70°C, the desired amount of formalin was added, and the mixture was again heated for 1 hour to 80°C. A typical resin with molar ratios of phenol to carbohydrate to urea to formaldehyde (P : C : U : F = 1 : 1 : 0.5 : 2.5) contains 18 % phenol, 34 % glucose, 6 % urea and 14 % formaldehyde, all percentage numbers expressed as weight%. All versions of resins prepared and tested by Christiansen and Gillespie included formaldehyde as significant resin-forming component. The molar ratios formaldehyde : phenol in the investigated resin version are partly even surprisingly high F/P = 2 - 5; the molar ratios formaldehyde : (sum phenol and urea) are at F/(P+U) = 1.3 - 2.9. Hence, formaldehyde was the main aldehyde component in these resins, with 5-HMF, formed *in situ* from the carbohydrate, only added a low amount of aldehyde functionality. In contrary, the patent application submitted here does not use neither phenol nor formaldehyde. Eliminating two of four raw materials in the preparation of the new resin concerning to this patent application, and especially formaldehyde in high molar proportion, hence, is a fully new approach not inferable from the work reported by Christiansen and Gillespie [Christiansen, A.W., Durable Wood Adhesives Based on Carbohydrates, in: Wood adhesives in 1985: Status and needs. Proceedings 47344, Christiansen, A.W., Gillespie, R.; Myers, G.E.; River, B.H. (Eds.), Forest Products Society, pp. 211-226 (1986). Christiansen, A.W. and Gillespie, R.H., Potential of carbohydrates for exterior-type adhesives. Forest Prod. J 36, 7-8, 20-28 (1985)]. The authors especially report that the molar ratio of formaldehyde to phenol (F/P) must not fall below F/P = 2 in order to keep the bond strengths of the tested laboratory plywood samples equal to those for standard, non-modified phenolic resins (consisting only of phenol and formaldehyde as main resin-forming raw materials. No information about concentrations of 5-HMF or of side products are given; as measure for the decomposition of the carbohydrate the amount of the condensate was monitored. The possible reaction paths are topic for detailed discussion, following various hypothetic reactions and reaction products. The authors conclude that various analytical methods were unable to detect any appreciable quantities of 5-HMF, which would be formed upon complete dehydration of hexose sugars. Amide linkages characteristic of glucosyl ureide formation remained undetected because of interference from the other components of the complex mixtures that resulted from the reactions. The mechanism of the reaction, hence, remained obscure according to the authors.

The authors showed that the carbohydrate, essentially in the reducing monosaccharide form, reacted under acid catalysis only with urea. Any phenol in the mixture does not react until mixed with formaldehyde and heated further. The reaction between the saccharide and urea showed no signs of proceeding through a furfuryl type structure, such as 5-HMF, but first produced a glycose ureide intermediate, which further reacted to form a multitude of products having aliphatic character.

Ghodoussi [Ghodoussi, V. (1992). Structural determination of a new carbohydrate-phenolic based resin coupled with urea. Ph.D. thesis, Oregon State University, Corvallis, OR] prepared resins, which were synthesized by reacting glucose with urea and phenol under acidic conditions. It was observed that although the polymer backbone is comprised of a carbohydrate, glucose is not incorporated in this resin in its unaltered state. By isolating key intermediate products, it was hypothesized that glucose reacts with urea to form an imine which deoxygenates to form a keto-imine moiety. The latter can then undergo degradation to form 2-deoxy-D-ribonopyranolactone. This lactone, or the imine itself, can then undergo homopolymerization as well as heteropolymerization with phenol. No reaction of urea with 5-HMF as such was mentioned in the thesis nor had been part of the tasks or the results of this work.

The chemistry of the acid stage of the synthesis of carbohydrate-based adhesives has been investigated by Helm and coworkers [Helm, R. F., Karchesy, J. J. and Barofsky, D. F. (1989). Carbohydrate-Urea-Phenol-based adhesives: transient formation of mono-and di-D-glucosylurea. Carbohydrate research, 189, 103-112]. The sulfuric acid-catalyzed reactions of d-glucose with urea in a phenol-water solution provided both N-β-d-glucopyranosylurea and N,N'-di-β-d-glucopyranosylurea. These compounds have been isolated from the resin as perbenzoylated derivatives, and compared spectroscopically with authentic samples. The d-glucosylureas are transient products whose combined yields approach 35% of the carbohydrate fraction during the initial stages of resin synthesis. Only traces of 5-(hydroxymethyl)-2-furaldehyde, levulinic acid, and formic acid were detected in the resin mixture, suggesting that the classical dehydration pathway is not a major route for the disappearance of d-glucose.

As outlined above, the production and use of 5-HMF suffers from several disadvantages.

One of the disadvantages is, that especially for the production of 5-HMF as such, purification treatment of the aqueous solution of the dehydration process is necessary; this step is tedious and cost-intense, using mainly organic solvents. Many processes for the production of 5-HMF are described in literature (for further information see Dunky (2021) [Dunky, M. (2021). Wood Adhesives Based on Natural Resources: A Critical Review Part IV. Special Topics. Reviews of Adhesion and Adhesives, 9(2), 189-268 and Progress in Adhesion and Adhesives, Vol. 6, K.L. Mittal (Ed.), pp. 761-840, Scrivener Publishing LLC, Beverly, MA, USA, 2021]), however the vast majority of these technologies remained proposals not used in any large-scale production. Though 5-HMF is mentioned as one of the mainly important feedstock chemicals in future, still the worldwide production volume is extremely small. Bigger production sites are in discussion but not yet on stream. The main problems in the increase of the production capacity concern the difficult purification of the formed 5-HMF including the use of organic solvents and the instability of 5-HMF towards further decomposition, linked with the necessity to store aqueous 5-HMF solutions at low temperatures. Solid 5-HMF is stable during storage (as long as it is not heated), but too expensive for most of industrial applications. Additionally the very limited amount produced worldwide is still an obstacle for any real breakthrough on the market.

Another road blocker for the increased use of 5-HMF is, as already mentioned above, its instability, which is caused by the formation of side products. In general, hexoses are dehydrated by acid catalysis to form 5-HMF. However, 5-HMF is easily rehydrated to levulinic and formic acid, on the one hand, and can polymerize, on the other hand, thereby forming during longer reaction times, especially at higher temperatures as well as during storage, complex, black-coloured residues called humins, which usually are not soluble in water [Kuster, B.F.M., 5-Hydroxymethylfurfural (HMF). A review focusing on its manufacture. Starch/Staerke 1990, 42, 314-321]. Therefore for storage the aqueous solutions of 5-HMF must be kept at low temperatures < 10°C.

Various attempts and proposals have been described in order to solve these problems. One of these problems could be solved if the formed 5-HMF would be used as soon as possible for further application, such as the synthesis of resins. This would avoid long storage times. Preferably the production of 5-HMF and the application of 5-HMF should be performed at the same site, in order to keep the storage time as well as transport time as short as possible.

Another proposal to solve the problem with the necessary purification of the intermediate solution during dehydration can be given, if the necessary purity of the 5-HMF is adjusted to the relevant application. If 5-HMF is chemically transformed to other substances, such as bishydroxymethylfuran (BHMF), diformylfuran (DFF), or furandicarboxylic acid (FDCA), the purity of 5-HMF as starting product must be high. In case of the production of resins for various technical applications, such as wood adhesives, the necessary purity of the 5-HMF needs thorough investigation. It can be expected, that residual chemicals from the dehydration of the carbohydrate as well as - at least some of the - byproducts deriving from 5-HMF after the formation of the 5-HMF, will not fully jeopardize the performance of a resin made from such intermediate and non-purified 5-HMF solutions. This can be also followed from the various results reported in literature, based, e.g., on the reaction between carbohydrates and phenol and/or urea. The composition of such intermediate solutions depends on the process of dehydration as well as on the exact moment where a sample of the solution has been taken. Few examples of this technology have been described above.

The ultimate attempt, which is also starting point of the invention described here, is the immediate use of such intermediate solutions for synthesis of resins. This means that the dehydration of the carbohydrate and the use of the formed 5-HMF take place immediately one after the other, or, preferably even at the same time simultaneously. In the first case still problems will occur, because the dehydration step should then prepare as high concentrations of 5-HMF as possible, in order to enable and facilitate the following resin synthesis process. However, it is known, that the higher the concentration of 5-HMF, especially at the high temperatures of the dehydration process (usually far above 100°C), the more the side reactions can occur, which are mainly the re-hydration and decomposition of 5-HMF to levulinic acid and formic acid.

The addition of urea to acidic carbohydrate solutions at higher temperatures has been already described in literature; however, only the formation of diureides is mentioned, formed in the reaction of the urea with the 5-HMF (for more details see further up). No further synthesis to urea-5-HMF resins took place in these cases, but phenol and in further steps even formaldehyde were added. Other information even tells that the reaction between the saccharide and urea showed no signs of proceeding through a furfuryl type structure, such as 5-HMF, but first produced a glycose ureide intermediate, which further reacted to form a multitude of products having aliphatic character. No information is available that the reaction of urea present during the dehydration step ended up in resin-type material.

Hence, the underlying technical objective of the present invention was to add a certain amount of an aminoplast forming chemical, especially urea, directly and immediately to the aqueous solution of the carbohydrate during or even preferred already at the start of the dehydration process of the fructose. The main attempt was that the aminoplast forming chemical, especially urea, reacts immediately with the just (*"in situ"*) formed 5-HMF. Hence, it should be possible to achieve the highest possible yield of 5-HMF in the dehydration process but at a low concentration of unreacted ("free") 5-HMF in the intermediate solution. By this procedure it was possible to keep the concentration of unreacted 5-HMF significantly lower, because the majority of the formed 5-HMF has immediately reacted.

The main attempt for the invention here is that the aminoplast forming substance, especially urea, has two main tasks: (i) the immediate reaction with the just (*"in situ"*) formed 5-HMF, in order to keep the concentration of this 5-HMF low, and, simultaneously, to perform the resin synthesis process, without the addition of other components, such as phenol, resorcinol, or, e. g., formaldehyde.

This technical objective is solved with a method for the production of an aminoplast resin as described by claim 1, the aminoplast resin produced by the aforementioned method according to claim 12, a method for the production of composite materials according to claim 15 in which the aminoplast resin according to the present invention is used as adhesive as well as the produced composite material according to claim 20. The respective dependent claims describe advantageous embodiments.

In a first aspect, the present invention is directed to the method for the production of an aminoplast resin by providing a reaction mixture comprising at least one carbohydrate, a catalyst and at least one aminoplast-forming chemical, generating 5-hydroxymethylfurfural (5-HMF) by catalytic dehydration of the at least one carbohydrate, and directly reacting the in-situ generated 5-HMF with the at least one aminoplast-forming chemical, wherein the reaction mixture is free of phenoplast forming chemicals.

The synthesis of a resin, as it can used as an adhesive for wood bonding and only based on the reaction of an aminoplast forming substance, especially urea, with 5-HMF formed by the dehydration of a carbohydrate, has not yet been described in scientific or patent literature. Either further components, such as phenol and formaldehyde, have been added, which mainly were responsible for the formation of a resin, or it was shown that the reaction with urea was not with 5-HMF but preferably directly with the carbohydrate as such. In the present patent application it surprisingly has been shown that the concentration of unreacted 5-HMF in the reaction solution can be reduced when urea is added already during the dehydration process; this means that even the greater part of 5-HMF formed reacts with urea, forming new and resin-like chemical compounds.

Surprisingly it could be demonstrated that despite the fact that the phenoplast forming chemicals, especially phenols, modified phenols or naturally derived phenols including lignin derivatives have been omitted - in the literature these compounds have been described to be mandatory for the formation of resins - nevertheless suitable aminoplast resins could be produced, which have been shown to exhibit potential as adhesives in the production of composite materials, especially wooden particles or fiber boards etc. as described later.

According to a preferred embodiment the aminoplast-forming chemical is selected from the group consisting of urea, substituted urea, melamine, substituted melamine, acetylenediurea, guanidine, thiourea, thiourea derivatives, diaminoalkanes (e.g. 1,6-diaminohexane, 1,5-diaminopentane), diamidoalkanes, cyanamide, dicyandiamide, benzoguanamine and mixtures thereof.

Especially, the at least one carbohydrate is selected from the group consisting mono- and disaccharides, such as fructose or glucose. The mentioned mono-and disaccharides also can be derived from polysaccharides, i. e. carbohydrates with a high molecular weight, such as e. g. starch. Before their introduction into the reaction mixture, the polysaccharides can be digested or degraded into the saccharides with a lower molecular weight.

According to a specific embodiment, the catalyst is an acid, preferably an inorganic acid, especially an acid selected from the group consisting of sulfuric acid, phosphoric acid, and organic sulfonic acids, especially p-toluene sulfonic acid (pTSA).

According to a preferred embodiment the method according to the present invention is carried out that for generating 5-HMF and reacting 5-HMF with the at least one aminoplast-forming chemical the reaction mixture is maintained at temperatures of at least 100 °C, preferably at least 120 °C to 250 °C, especially preferred 130 °C to 180 °C.

The method according to the present invention can be carried out as batch reaction or, in the alternative continuously.

If carried out as batch reaction, it is preferred that the initial concentration of the at least one carbohydrate in the reaction mixture is adjusted from 0.01 to 60 g/l, preferably from 10 to 50 g/l, especially preferred from 30 to 50 g/l.

Furthermore, it is preferred that if the method is carried out as a batch reaction, the initial concentration of the at least one aminoplast-forming chemical in the reaction mixture is adjusted from 0.3 to 5 molar equivalents, preferably from 0.5 to 3.0 molar equivalents, especially preferred from 1.0 to 2.5 molar equivalents with respect to the molar content of the at least one carbohydrate in the reaction mixture, with the molar content of the carbohydrate component in the reaction mixture calculated as monomeric carbohydrate.

If, alternatively carried out as continuous reaction the at least one carbohydrate continuously is fed to the reaction mixture, wherein the concentration of the at least one carbohydrate in the reaction mixture is maintained from 0.01 to 60 g/l, preferably from 10 to 50 g/l, especially preferred from 30 to 50 g/l.

Additionally or alternatively it is preferred in this case the at least one aminoplast-forming chemical is fed continuously to the reaction mixture, wherein the concentration of the at least one aminoplast forming chemical in th e reaction mixture is maintained from 0.3 to 5 molar equivalents, preferably from 0.5 to 3.0 molar equivalents, especially preferred from 1.0 to 2.5 molar equivalents with respect to the molar content of the at least one carbohydrate in the reaction mixture, with the molar content of the carbohydrate component in the reaction mixture calculated as monomeric carbohydrate. In case of disaccharides, oligosaccharides (e.g., after an already performed degradation step of a polysaccharide), or polysaccharides, the molar amount of an apparent monomer as average of various possible monomeric sugars of the disaccharides, oligosaccharides, or polysaccharides is used for the calculation of the various molar ratios. Such calculation is possible and acceptable, because each molecule of a monomer sugar yields one molecule of 5-HMF after dehydration.

More specifically, the catalyst is present in a concentration in between 0.1 and 5.0 wt.-%, preferably from 0.3 to 3.0 wt.-%, especially preferred from 0.5 to 2.0 wt.-%, calculated on the whole amount of the reaction mixture.

According to yet another preferred embodiment at least one additional aldehyde, which is not formaldehyde and which is different from 5-HMF can be present or can be fed to the reaction mixture.

The aforementioned additionally aldehyde preferably is glyoxal.

In this specific embodiment it is preferred, the amount of the at least one aldehyde different from 5-hydroxymethylfurfural is between 3 to 50 wt.-%, preferably 8 to 35 wt.-%, especially from 15 to 20 wt.-%, based on the amount of the at least one aminoplast-forming chemical added.

The reaction mixture preferably is an aqueous reaction mixture, i. e. water is present to dissolve or disperse the above mentioned compounds. The total concentration of the reaction mixture is given as sum of the amounts of the various raw materials used, based on the mass of the total reaction mixture including the used solvent, such as preferably water.

After finishing the reaction, the reaction mixture, i. e. the aqueous solution comprising the produced aminoplast resin can be used, without carrying out any isolation or purification steps as adhesive.

It is, however, preferred, to increase the solid content of the reaction mixture by at least partially removing the water from the mixture comprising the aminoplast resin. It is especially preferred, if the solution is concentrated to a solid content of 60 to 85 wt.-%, preferably 65 to 80 wt.-%.

The present invention also refers to an aminoplast resin, which is preferable according to a method described in the foregoing.

Especially, the aminoplast resin as characterized by a solid content of 60 - 85 mass%, preferably 65 - 80 mass%, all solid contents determined by evaporating the water content of the reaction solution after its preparation under vacuum until a constant mass has been achieved.

Furthermore, the aminoplast resin described in the foregoing preferably has a viscosity of 150 - 1,000 mPa*s, preferably 200 - 600 mPa*s, particularly preferably 200 - 400 mPa*s, all viscosities measured using a rotational viscosimeter at 20°C according to ISO 3219:1994.

According to yet another aspect the present invention refers to a method for the production of composite materials, comprising the following steps:
Production of an aminoplast resin described in the foregoing, which e. g. can be produced by a method according to the present invention,
bringing into contact the aminoplast resin with lignocellulose containing or non-lignocellulose containing material or a mixture thereof,
preparation of a curable mass, and
curing of the curable mass under formation of the composite material, said curing being carried out by means of elevated temperature and pressure.

Especially preferred in this method is that the lignocellulose-containing materials or the non-lignocellulose containing materials is selected from the group consisting of wood chips, wood fibers, plant fibers, wood flakes, wood strands, wood particles, wood stripes, mixtures of various lignocellulosic materials, inorganic fibres, inorganic fibre mats, and mixtures of these.

Furthermore, it is preferred that the lignocellulose-containing or the non-lignocelluose containing material is mixed with an amount of 2% by weight to 20% by weight, preferably with an amount of 5% by weight to 15% by weight, of the aminoplast resin, based on the weight of the dry lignocellulose-containing or non-lignocellulose containing material.

The step of preparing a curable mass e. g. can be carried out in a flat press, continuous press or molding press.

The curing especially is carried out in a press at a temperature of 160 to 250°C.

Yet another aspect of the present invention refers to a composite material obtained to a method described in the foregoing.

Preferably, the composite material is selected from the group consisting of composite boards based on wood or inorganic materials, especially in form of wooden particleboards, fiberboards, OSB panels, HDF- or MDF panels, plywood and/or blockboards, for applications such as e.g. flooring-, wall- or ceiling panels.

The present invention is described in further detail in the following without limiting the present invention to these specific embodiments.

As it will be shown below, it was noticed that under the conditions of the dehydration process (temperature well above 100°C, i.e., at least 130°C) the added urea reacts with the *in situ* formed 5-HMF. By this reaction the actual concentration of 5-HMF is kept low, whereas the overall yield of 5-HMF (as sum of still unreacted and of already reacted 5-HMF) increases with time. This lower actual concentration of still unreacted 5-HMF ("free 5-HMF") helps to keep the further re-hydration reactions as much as possible suppressed, i.e., the formation of levulinic acid and formic acid on the one hand, and the formation of humins on the other hand. Additionally, immediately and already during the dehydration of the carbohydrate, the synthesis of the intended urea-5-HMF resin takes place. In order to be able to use as much 5-HMF as possible, without loss of 5-HMF due to re-hydration to levulinic acid and formic acid, it was surprisingly noticed that urea acts as a kind of stabilizer, as it could react with the 5-HMF forming an imine that needs to be hydrolyzed before an unwanted hydration could occur. Additionally, this imine was able to react further to produce some oligomers as the first step of the resin synthesis, without the addition of a phenolic compound (mainly phenol) and/or additional formaldehyde.

The 5-HMF formed *in situ* hence will be used immediately in the resin production and still during further dehydration of the carbohydrate. The term "immediately" here means that the dehydration of the carbohydrate and the resin synthesis run simultaneously. This also means that no need of separate storage of the just formed 5-HMF is necessary. No purification of the solution or separation of residual carbohydrates take place. By this procedure, the whole process becomes much easier and cheaper. Just the amounts of 5-HMF are prepared, which are used for the resin production. The storage of the raw materials, e.g., a carbohydrate, is possible without any problem, compared to the difficult storage of a 5-HMF solution.

Another advantage is given by the fact, that the low concentration of unreacted 5-HMF suppresses the further decomposition of 5-HMF to levulinic acid and formic acid at the high temperatures, as they are necessary for the dehydration of the carbohydrates. Usually these temperatures are in the range of at least 130°C, preferably at 140 - 160°C, in order to enable an industrially satisfying conversion speed. However, the higher the temperature and the higher the concentration of 5-HMF, the more this further decomposition to levulinic acid and to formic acid takes place. If now the invented procedure enables the immediate reaction between just formed 5-HMF and urea, the highest possible use of 5-HMF is given with the lowest possible loss towards formation of levulinic acid and formic acid.

To estimate the amount of 5-HMF formed *via* dehydration of fructose, samples after heating to a certain temperature for different duration of time have been analyzed by HPLC after dilution, using an UV sensor and measuring the absorbance at 284 nm, which is the maximum absorbance for 5-HMF. Other compounds that might have been formed during the reaction, such as levulinic acid or formic acid, could not be detected, as they do not absorb at this wavelength. Based on a relevant calibration curve, the yield of 5-HMF in this reaction was calculated.

In a first experiment, two aqueous solutions of fructose with concentrations of 0.1 and 1 g/mL were mixed with 10 mL of a 2% phosphoric acid, resulting in 20 mL of a 0.05 and 0.5 g/mL solution of fructose containing 1% of the acid catalyst. Then, these mixtures were heated to 150°C for various time spans from 10 to 60 minutes. After the reaction, the solutions were analyzed by HPLC. The results are shown in Fig. 3. For the solution with a concentration of 0.05 g/mL (= 5 wt% fructose solution), first a linear increase in the yield with time is given. After 40 minutes at 150°C, the yield levels out at around 25% and humins started to form. They were visible to the naked eye as deposit in the bottom of the reactor. For the concentrated solution (0.5 g/mL = 36 wt% fructose solution) a similar behavior was observed. In this case, due to the higher concentration of fructose, all processes (i.e., fructose dehydration and 5-HMF rehydration) run faster; already after 15 minutes, humins are visible. The highest yields obtained prior to formation of humins were 22% (after 30 minutes) and 19% (after 10 minutes) for the 0.05 and the 0.5 g/mL fructose solution, respectively (Fig. 3, yield of 5-HMF measured by HPLC after heating two carbohydrate solutions with different concentration at 150°C for different periods of time using phosphoric acid as acid catalyst). As suspected, at a certain concentration of 5-HMF the rate of 5-HMF decomposition is higher than the formation rate of 5-HMF. At this point, continuing the reaction would not any longer result in a higher yield of 5-HMF but rather in a lower concentration of 5-HMF in the solution due to the enhanced further decomposition of 5-HMF.

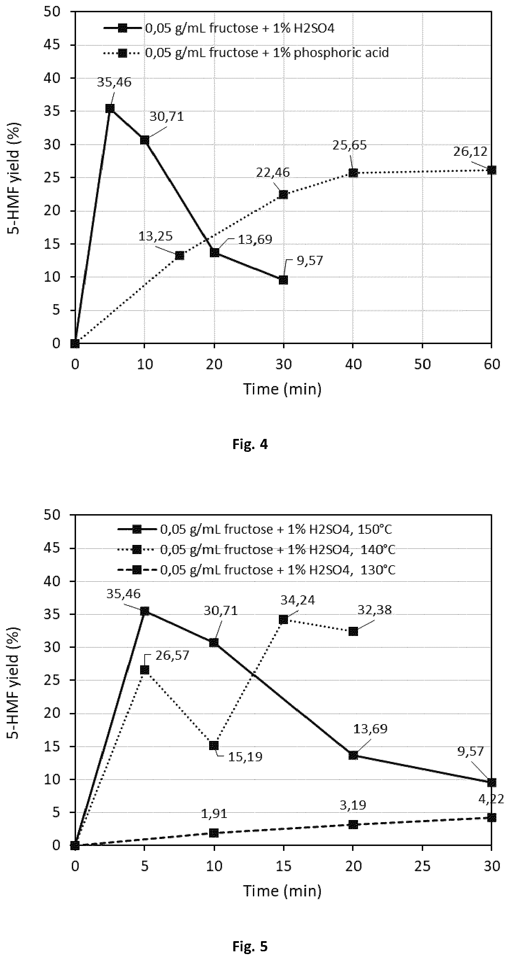

For another experiment, a stronger acid, such as sulfuric acid (H₂SO₄), was used in the same amount (i.e., 1%) with the diluted fructose solution (i.e., 0.05 g/mL). In this case, a yield of 35% was observed already after 5 minutes, followed by a strong decrease of the yield, resulting in less than 10% after 30 minutes (Fig. 4, showing a comparison of the 5-HMF yield measured by HPLC when heating at 150°C for different periods using either phosphoric acid or sulfuric acid as acid catalyst in a 1% concentration.

Sulfuric acid was much more efficient than phosphoric acid, but had accelerated the reaction so strongly, that humins formed already after 5 minutes. For this reason, lower temperatures for the conversion, such as 130 or 140°C, were studied as this should result in similar or even higher yields as those obtained at 150°C, however at longer conversion times, mainly due to reduced rate of 5-HMF degradation and to less humins formation. At 140°C (blue line) (Fig. 5, showing the yield of 5-HMF produced from a 0.05 g/mL fructose solution containing 1% of H₂SO₄ after heating at 130°C, 140°C, and 150°C. The yields were determined by HPLC using a 5-HMF calibration curve.), the formation of 5-HMF occurred with lower speed (also showing some inconsistencies in the results, which, however, are not affecting the overall picture); however, again after some time, here 20 minutes, the concentration of 5-HMF levelled out. Finally, at 130°C, a very low rate of conversion was observed (yield only 4% after 30 min).

Further similar experiments were performed at 130°C using different types of acids and different addition amounts of p-toluene sulfonic acid (pTSA) as acid. The results, in general, are the same as shown above. Up to a certain yield, 5-HMF is formed; then this yield levels out and finally starts to decrease, because the rehydration reaction becomes dominant.

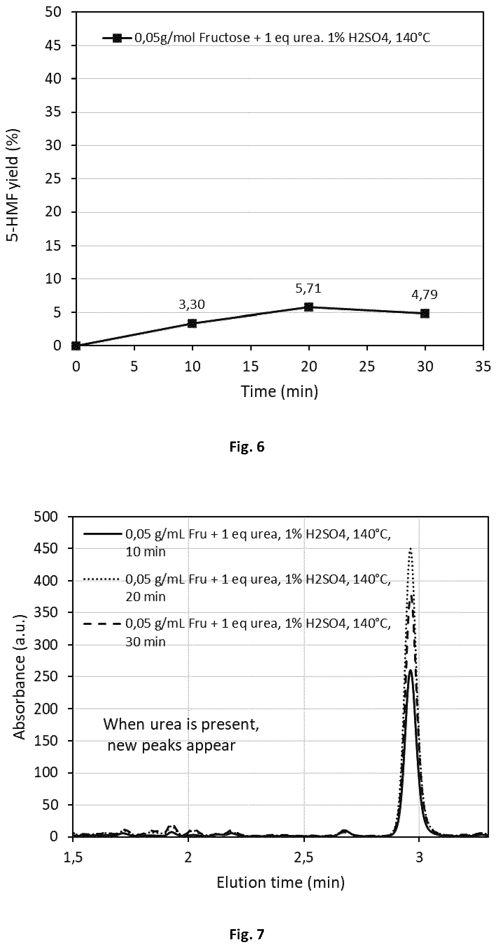

The main attempt of the invention described here is the surprising finding that the addition of an aminoplast forming substance, especially urea, directly to the carbohydrate solution leads to an immediate reaction with the just (*"in situ"*) formed 5-HMF. By this reaction a certain proportion of the 5-HMF is consumed immediately, hence keeping the concentration of 5-HMF low. This surprising finding was the result, when a 0.1 g/mL fructose solution containing 1 molar equivalent of urea (0,033g/mL) was mixed with a 2% H₂SO₄ solution to prepare a 0.05 /mL fructose solution with 1% H₂SO₄ and was kept at 140°C for 10, 20, 30, and 40 minutes. Even if a gradual darkening of the sample colour was visible during the reaction time at 140°C, only a low yield of 5-HMF was observed with a maximum at 7.5% after 20 minutes, followed by a slow decrease to 5% after 30 minutes (Fig. 6, showing the yield of 5-HMF produced from a 0.05 g/mL fructose solution containing one molar equivalent of urea with a 1% H₂SO₄ after heating at 140°C. Yields were determined by HPLC using a 5-HMF calibration curve. T scale of the y-axis was kept the same as in the former figures). The result for the sample annealed for 40 minutes is not shown in the graph, as the yield was almost zero.

The term "yield" here is equivalent with the concentration of "free" 5-HMF in the solution. The "total yield" of 5-HMF is the sum of this concentration of "free" 5-HMF and that proportion of 5-HMF, which has reacted with the added urea. It was also very surprising, that no humins or precipitates were observed, which would explain to a certain extent the missing concentration of 5-HMF formed in the dehydration reaction from the carbohydrate. The surprising consequence was, that all 5-HMF formed turned into some soluble compounds (but not to insoluble humins), which, however, do not absorb at 284 nm (wavelength of the detector during the measure) at all or very poorly. This assumption is supported by the HPLC measurements revealing new peaks at lower elution time but with a very small absorbance (Fig. 7, showing a superposition of the HPLC chromatographs of a 0.05 g/mL fructose solution containing one molar equivalent of urea with a 1% H₂SO₄ after 10 minutes, 20 minutes, and 30 minutes at 140°C in presence of H₂SO₄ displaying a plethora of new peaks formed).

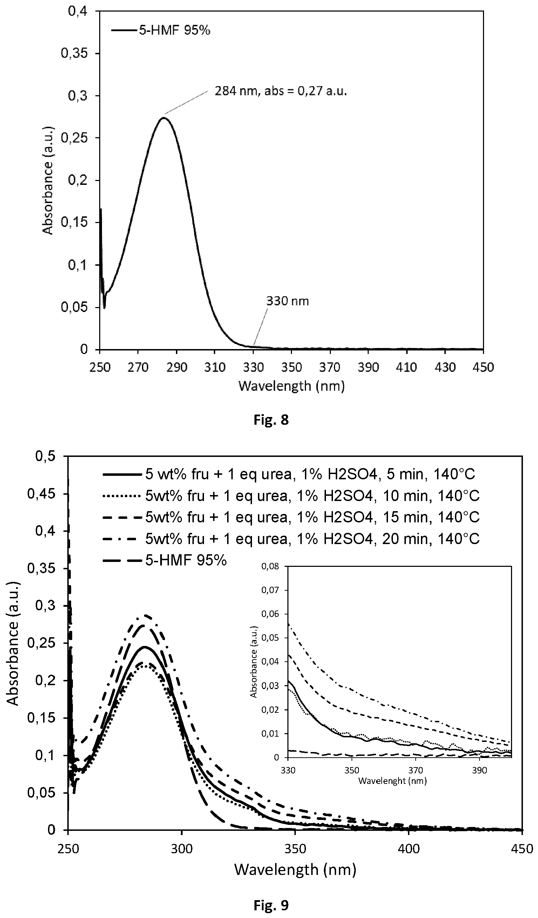

The small values for the absorbance at the shorter elution times do not necessarily mean a low concentration of such compounds. The absorbance was measured at 284 nm, because this is the wavelength at which 5-HMF absorbs the most; this may not be the case for these new products. Whereas the HPLC separates the compounds present in the mixture and the HPLC detector measures the absorbance of each compound only at one pre-defined wavelength, UV-vis spectrometry shows the absorbance of the whole mixture for the whole spectra of UV and visible light (i.e., from 250 to 750 nm). The UV-vis spectrum of 5-HMF is displayed in Fig. 8, showing an UV-vis spectrum of 5-HMF (95% pure substance) with a maximum absorbance at 284 nm. 5-HMF stops to absorb already at 330 nm.

In order to determine at which wavelength the absorbance of the newly formed products starts and where the maximum absorption is given, the experiment was repeated (i.e., 0.05 g/mL fructose + 1 equivalent of urea; 1% sulfuric acid, at 140°C); the mixture was heated for 5, 10, 15, and 20 minutes (Fig. 9, showing a superposition of UV-vis spectra of a 0.05 g/ml fructose solution containing 1.0 equivalent of urea and 1% of H₂SO₄ after heating at 140°C for 5 minutes, 10 minutes, 15 minutes, and 20 minutes.

In addition, a calibration curve was prepared to estimate the yield of 5-HMF formed. It is visible in Fig. 9 that upon heating at 140°C in presence of urea in 1.0 molar equivalent, the absorption peak of 5-HMF appears as well, but not only. 5-HMF already stops to absorb at 330 nm; however, when urea is present, it could be shown, that surprisingly a certain absorption also occurs at higher wavelengths up to 390-400 nm. The longer the reaction time, the further is the expansion towards higher wavelengths with distinct absorption, especially for the samples after 15 minutes and after 20 minutes at 140°C (Fig. 9). The absorption curve of pure 5-HMF is also shown in Fig. 9 for sake of comparison.

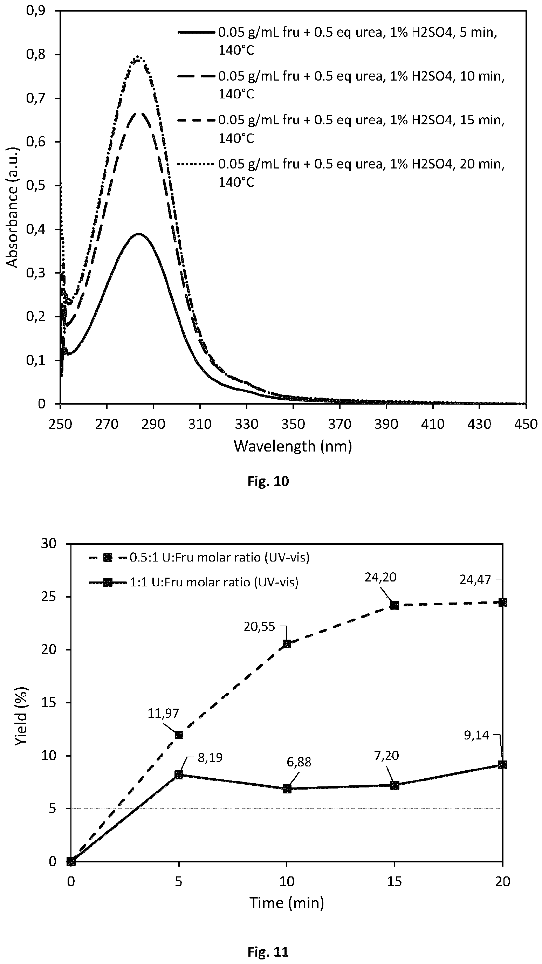

In order to secure the results of the above-mentioned experiment, another experiment was performed but at a lower amount of urea of 0.5 instead of former 1.0 molar equivalent (Fig. 10, showing a superposition of UV-vis spectra of a 0.05 g/ml fructose solution containing 0.5 equivalent of urea and 1% of H₂SO₄ after heating at 140°C for 5 minutes, 10 minutes, 15 minutes, and 20 minutes.

This reduction of urea equivalents now consequently resulted in a lower absorbance of the new products but also increased significantly the yield of unreacted ("free") 5-HMF compared to the experiment with 1 equivalent of urea (Fig. 11, showing a yield of 5-HMF produced from a 0.05 g/mL fructose solution containing 0.5 and 1.0 molar equivalent of urea with 1% H₂SO₄ after heating at 140°C. Yields were determined by UV-vis using a 5-HMF calibration curve). The term "yield" is expressed in percent of the used carbohydrate at the start of the experiment.

By decreasing the amount of the added urea, the concentration of unreacted 5-HMF (shown as "yield" of 5-HMF on the y-axis of Fig. 11) increased significantly after 20 minutes from 9 to 24%. Still, without the addition of urea the yield would be >30% after 20 minutes at 140°C (Fig. 5).

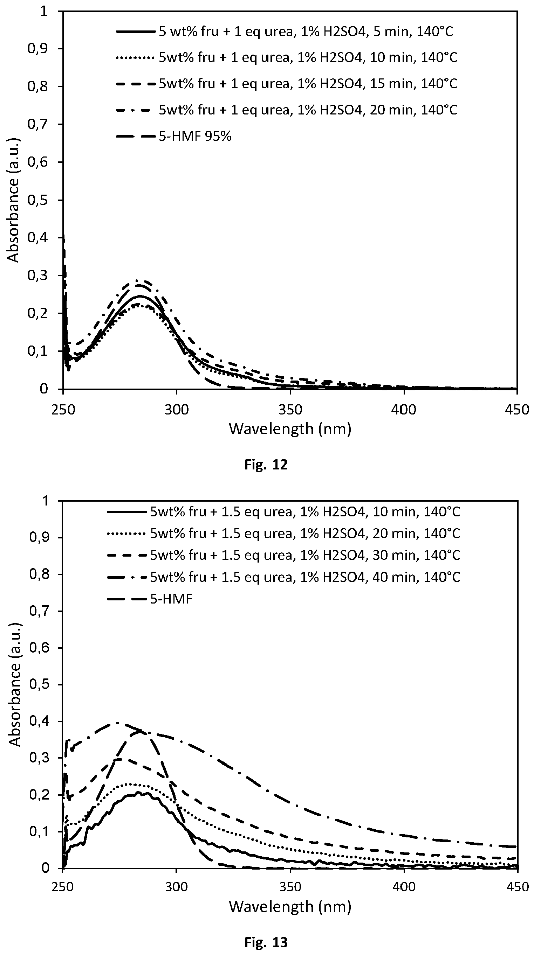

The addition of 0.5 and 1.0 equivalents of urea has shown a great influence on the concentration of unreacted ("free") urea in the intermediate solution, but has not yet shifted the maximum in the absorption curve. However, it was noticed that stronger absorption occurred at wavelength of 330 - 350 nm, compared to the UV-vis spectrum of pure 5-HMF, where the absorption of 5-HMF already stops at 330 nm (see Fig. 8). These additional absorption bands can be clearly seen in Fig. 12 for the example of addition of 1.0 equivalents of urea. Fig. 12 shows the superposition of UV-vis spectra of a 5 wt% fructose solution containing 1 equivalent of urea and 1% of H₂SO₄ after heating at 140°C for 5 minutes, 10 minutes, 15 minutes, and 20 minutes. The absorption curve for pure 5-HMF is again added for sake of comparison.

In further experiments, an even higher addition of urea (1.5 equivalents) was investigated. This was tested when 0.5, 1.0, and 1.5 equivalents of urea, all numbers based on fructose, were added to the diluted fructose solution (0.05 g/mL = 5 wt%). This should secure the effect of the addition of urea on the concentration of "free" 5-HMF and show, if the yield of 5-HMF further decreases at higher urea additions and new reactions occur between urea and the *in situ* formed 5-HMF (Fig. 13, showing the superposition of UV-vis spectra of a 5wt% fructose solution containing 1.5 equivalent of urea and 1% of H₂SO₄ after heating at 140°C for 10 minutes, 20 minutes, 30 minutes, and 40 minutes. 5 wt% correspond to 0.05 g/mL.). The detection was again done by UV-vis spectrometry for the whole sample. The absorption curve of pure 5-HMF is again added to the graph for sake of comparison.

The absorption curves in Fig. 13 show that the absorption significantly expands to higher wavelengths as well as increases with longer reaction time. Especially at wavelength of approx. 330 nm or higher strong absorption is given, which increases with the reaction time. Another clear effect is that the absorption maximum of the curve is shifted significantly to lower wavelengths, from the original maximum of 5-HMF at 284 nm finally to approx. 276 nm. Both, the stronger absorption at higher wavelengths as well as the shift of the maximum indicate that new compounds have been formed based on the reaction of the added urea with most probably 5-HMF formed simultaneously.

In the experiments with the 1.5 equivalent of urea a change in the absorption spectra occurred. 5-HMF was only discernable up to 10 minutes at 140°C, when the absorption maximum was still at 284 nm. After 20 minutes at 140°C, the absorption increased, but the absorption maximum at 284 nm of 5-HMF is not as clear as before; it even shifted completely to a lower wavelength (276 nm) when the time at 140°C increased further. After 40 minutes at 140°C, a new maximum is clearly observed at 276 nm (Fig. 13). With this addition of urea and its immediate reaction during the dehydration of the carbohydrate it was possible to keep the concentration of 5-HMF low enough in order to supress the most part of a further decomposition of 5-HMF to levulinic acid and formic acid, but to use the *in situ*-formed 5-HMF immediately for the synthesis of the urea-5-HMF resin.

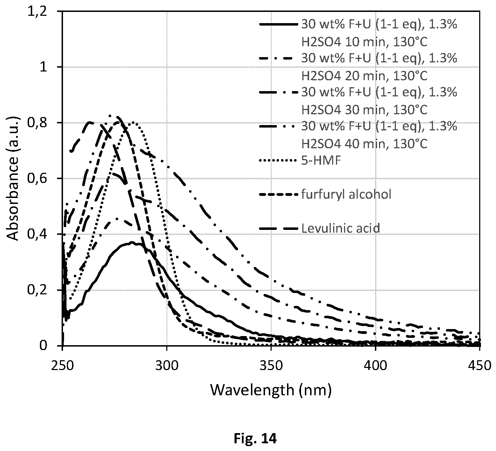

Further experiments showed that the effect of the immediate reaction of urea with the *in situ*-formed 5-HMF is also given with more concentrated carbohydrate solutions. For this purpose, a 30 wt% solution (22.5 wt% fructose + 7.5 wt% urea, representing a molar ratio fructose: urea = 1:1) containing 1.3% of H₂SO₄ was used and kept at 130°C. The amount of acid was increased from 1.0 to 1.3 to compensate for the relatively big absolute amount of urea compared to more diluted solutions. Again, also at this higher concentration, the same trend as noticed with 1.5 equivalents of urea in the still diluted version was observed (Fig. 14, showing the superposition of UV-vis spectra of a 30 wt% solution (fructose and urea in a 1 : 1 molar ratio) containing 1.3 % of H₂SO₄ after heating at 130°C for 10 minutes, 20 minutes, 30 minutes, and 40 minutes. The absorption for pure 5-HMF (maximum at 284 nm), furfuryl alcohol (maximum at 278 nm), and levulinic acid (maximum at 264 nm) are shown for sake of comparison. The formation of 5-HMF (plus already other products, absorbance at around 330 nm and at higher wavelengths) was visible in the first 10 minutes. After 20 minutes at 130°C, a new peak at 274 nm (similar to the maximum at 276 nm, as mentioned above for the diluted system) was already well defined. Continuing the reaction (i.e., to 30 and 40 minutes) results in a sharper maximum and higher absorbance. The comparison with the spectra of 5-HMF, furfuryl alcohol, and levulinic acid shows, that the new maximum is close (but not identical) to furfuryl alcohol. More important, this maximum does not match with levulinic acid, which would point to 5-HMF decomposition by re-hydration.

As a summarizing conclusion, it was surprisingly noticed that the addition of urea to fructose solutions at various urea to fructose molar ratios acts as stabilizer decreasing the concentration of unreacted ("free") 5-HMF and simultaneously leading to significant formation of new products. This means that part of the 5-HMF formed in the dehydration process immediately reacted with the added urea. In that way, the addition of urea can help to prevent the degradation of 5-HMF into levulinic and formic acid as well as the formation of humins. With the immediate reaction of the urea with the 5-HMF formed by the decomposition of the fructose, the concentration of 5-HMF is kept low and, hence, the risk of this further decomposition of 5-HMF to levulinic acid and formic acid is less. The yield of "free" 5-HMF is reduced significantly when urea is present during the dehydration process of the carbohydrate.

## Claims

1. Method for the production of an aminoplast resin by
providing a reaction mixture comprising at least one carbohydrate, a catalyst and at least one aminoplast-forming chemical,
generating 5-hydroxymethylfurfural (5-HMF) by catalytic dehydration of the at least one carbohydrate, and
directly reacting the in-situ generated 5-HMF with the at least one aminoplast-forming chemical,
wherein the reaction mixture is free of phenoplast forming chemicals.

2. Method according to claim 1, **characterized in that** the aminoplast-forming chemical is selected from the group consisting of urea, substituted urea, melamine, substituted melamine, acetylenediurea, guanidine, thiourea, thiourea derivatives, diaminoalkanes (e.g. 1,6-diaminohexane, 1,5-diaminopentane), diamidoalkanes, cyanamide, dicyandiamide, benzoguanamine and mixtures thereof.

3. Method according to one of the preceding claims, **characterized in that** the at least one carbohydrate is selected from the group consisting of mono- and disaccharides, such as fructose or glucose.

4. Method according to one of the preceding claims, **characterized in that** the catalyst is an acid, preferably an inorganic acid, especially an acid selected from the group consisting ofsulfuric acid, phosphoric acid, and organic sulfonic acids, especially p-toluene sulfonic acid (pTSA).

5. Method according to one of the preceding claims, **characterized in that** for generating 5-HMF and reacting 5-HMF with the at least one aminoplast-forming chemical the reaction mixture is maintained at temperatures of at least 100 °C, preferably at least 120 °C to 250 °C, especially preferred 130 °C to 180 °C.

6. Method according to one of the preceding claims, **characterized in that**
the method is carried out as a batch reaction and the initial concentration of the at least one carbohydrate in the reaction mixture is adjusted from 0.01 to 60 g/l, preferably from 10 to 50 g/l, especially preferred from 30 to 50 g/l, or
the method is carried out continuously and the at least one carbohydrate continuously is fed to the reaction mixture, wherein the concentration of the at least one carbohydrate in the reaction mixture is maintained from 0.01 to 60 g/l, preferably from 10 to 50 g/l, especially preferred from 30 to 50 g/l.

7. Method according to one of the preceding claims, **characterized in that**
the method is carried out as a batch reaction and the initial concentration of the at least one aminoplast-forming chemical in the reaction mixture is adjusted from 0.3 to 5 molar equivalents, preferably from 0.5 to 3.0 molar equivalents, especially preferred from 1.0 to 2.5 molar equivalents with respect to the molar content of the at least one carbohydrate in the reaction mixture, with the molar content of the carbohydrate component in the reaction mixture calculated as monomeric carbohydrate, or
the method is carried out continuously and the at least one aminoplast-forming chemical is fed continuously to the reaction mixture, wherein the concentration of the at least one aminoplast-forming chemical in the reaction mixture is maintained from 0.3 to 5 molar equivalents, preferably from 0.5 to 3.0 molar equivalents, especially preferred from 1.0 to 2.5 molar equivalents with respect to the molar content of the at least one carbohydrate in the reaction mixture, with the molar content of the carbohydrate component in the reaction mixture calculated as monomeric carbohydrate.

8. Method according to the preceding claims, **characterized in that** the catalyst is present in a concentration in between 0.1 and 5.0 wt.-%, preferably from 0.3 to 3.0 wt.-%, especially preferred from 0.5 to 2.0 wt.-%, calculated on the whole amount of the reaction mixture.

9. Method according to one of the preceding claims, **characterized in that** at least one aldehyde, which is not formaldehyde and which is different from 5-hydroxymethylfurfural is present in| [RV1] or is fed to the reaction mixture.

10. Method according to the preceding claim, **characterized in that** the at least one aldehyde different from 5-hydroxymethylfurfural is glyoxal.

11. Method according to one of the both preceding claims, **characterized in that** the amount of the at least one aldehyde different from 5-hydroxymethylfurfural is between 3 to 50 wt.-%, preferably 8 to 35 wt.-%, especially from 15 to 20 wt.-%, based on the amount of the at least one aminoplast-forming chemical added [RV2].

12. Aminoplast resin preparable according to a method according to one of the preceding claims[RV3].

13. Aminoplast resin according to the preceding claim, **characterized by** a solid content of 60 - 85 mass%, preferably 65 - 80 mass%, all solid contents determined by evaporating the water content of the reaction solution after its preparation under vacuum until a constant mass has been achieved.

14. Aminoplast resin according to one of the both preceding claims, **characterized by** a viscosity of 150 - 1,000 mPa*s, preferably 200 - 600 mPa*s, particularly preferably 200 - 400 mPa*s, all viscosities measured using a rotational viscosimeter at 20°C according to ISO 3219:1994.

15. Method for the production of composite materials, comprising the following steps:
provision of a aminoplast resin according to one of the claims 1 to 11 and/or 12 to 14,
bringing into contact the aminoplast resin with lignocellulose containing or non-lignocellulose containing material or a mixture thereof,
preparation of a curable mass, and
curing of the curable mass under formation of the composite material, said curing being carried out by means of elevated temperature and pressure.

16. Method according to the preceding claim, **characterized in that** the lignocellulose-containing materials or the non-lignocellulose containing materials is selected from the group consisting of wood chips, wood fibers, plant fibers, wood flakes, wood strands, wood particles, wood stripes, mixtures of various lignocellulosic materials, inorganic fibres, inorganic fibre mats, and mixtures of these.

17. Method according to one of the both preceding claims, **characterized in that** the lignocellulose-containing or the non-lignocelluose containing material is mixed with an amount of 2% by weight to 20% by weight, preferably with an amount of 5% by weight to 15% by weight, of the aminoplast resin, based on the weight of the dry lignocellulose-containing or non-lignocellulose containing material.

18. Method according to one of the claims to 15 to 17, **characterized in that** the step of preparing of a curable mass is carried out in a flat press, continuous press or molding press.

19. Method according to one of the claims 15 to 18, **characterized in that** the curing of the resin is carried out in a press at a temperature of 160 to 250°C.

20. Composite material, obtained by a method according to one of claims 15 to 19, preferably composite boards based on wood or inorganic materials, especially in form of wooden particleboards, fiberboards, OSB panels, HDF- or MDF panels, plywood and/or blockboards, for applications such as e.g. flooring-, wall- or ceiling panels.
